# EUROPÄISCHE PATENTSCHRIFT

(11) **EP 2 402 520 B1**
(45) Veröffentlichungstag und Bekanntmachung des Hinweises auf die Patenterteilung: **07.10.2020**
(21) Anmeldenummer: 11172270.8
(22) Anmeldetag: 30.06.2011
(51) Int. Cl.: E03F 5/04, F16L 5/04, A62C 2/06

(54) **Brandschutz für Bodenablauf**
Fire protection for floor drain
Pare-feu pour siphon de sol

(30) Priorität: 01.07.2010 DE 102010030836
(43) Veröffentlichungstag der Anmeldung: 04.01.2012
(73) Patentinhaber: TECE GmbH, 48282 Emsdetten (DE)
(72) Erfinder: Krabbe, Martin, 48341 Altenberge (DE); Thomas, Christian, 48477 Hörstel-Riesenbeck (DE); Seidel, Wolfgang, 32457 Porta Westfalica (DE)
(74) Vertreter: Lippert Stachow Patentanwälte Rechtsanwälte

(56) Entgegenhaltungen:
- EP-A1- 1 703 189
- EP-A2- 0 090 635
- EP-A2- 0 153 564
- WO-A1-99/18303
- WO-A1-2008/056028
- DE-U1-202004 004 125
- GB-A- 2 212 187
- US-A- 5 299 836
- US-A1- 2002 100 404

## Beschreibung

Die Erfindung betrifft einen Bodenablauf, der in eine durchgehende Bodenöffnung einsetzbar ist, umfassend einen Ablauftopf mit einem oberseitigen Flanschrand und unterseitigen Ablaufstutzen sowie einer Brandschutzmanschette mit Brandschutzmitteln. Ferner betrifft die Erfindung einen Boden mit Bodenablauf und eine Verfahren zur Montage eines Bodenablaufs. Anwendungsbereiche der Erfindung sind Öffnungen in Böden bzw. Decken, die dem Wasserablauf aus Nassräumen u.ä. dienen und den Bestimmungen des Brandschutzes unterliegen. Diese Bestimmungen sehen beispielsweise vor, dass diese Öffnungen im Falle eines Brandes den Durchlass für Hitze und Rauch für einen bestimmten Zeitraum sperren.

Abläufe dieser Art sind in zahlreichen Variationen am Markt bekannt. Zumeinst wird eine intumeszierende Masse als Brandschutzmittel eingesetzt, die bei starker Erhitzung bei ca. 150°C um das 15- bis 20-fache aufquillt bzw. aufschäumt und so einen Ablaufstutzen aus Kunststoff abquetscht. Polymermaterialien sind als intumeszierende Massen bekannt, beispielweise auf Acrylatbasis. Diese intumeszierende Masse kann an der Innenseite eines Aufnahmemittels vorgesehen sein, welches den Ablauf in Einbaulage umschließt. Das Aufnahmemittel umfasst normalerweise eine Durchgangsöffnung für ein Kunststoffabflussrohr. Aufgrund des Aufnahmemittels expandiert die Masse nach Innen und drückt dabei das Kunststoffabflussrohr und/oder Ablaufstutzen zusammen und versperrt auf diese Weise den Ablaufstutzen und damit letztlich die gesamte Öffnung. Entsprechend den Brandschutzbestimmungen wird einer Brand- bzw. Rauchausbreitung durch diese Öffnung ein Widerstand entgegengesetzt.

Abläufe dieser Art mit metallischen Aufnahmemitteln sind beispielsweise aus EP 1 528 307, DE 10 2004 020 251 und EP 1 630 318 bekannt. Ähnliche Abläufe mit formstabilen Aufnahmemitteln sind noch aus EP 1 229 175, und EP 1577 453 bekannt. Aus EP 0 457 012 sind noch Kunststoffabläufe mit ähnlich ausgebildeten metallischen Aufnahmemitteln bekannt, ohne dass jedoch Brandschutzmittel vorgesehen sind.

Ferner sind durch US 5 299 836 Abläufe mit einem Ablauftopf mit einem dessen Einlauföffnung umgebenden Flansch und einem unterseitigen Ablaufstutzen bekannt, die in eine Bodenöffnung einsetzbar ist, welche mit einer gegebenenfalls zweiteiligen Hülse ausgekleidet sind. Letztere ist an ihrem unterseitigen Ende mit einem in die Öffnung hineinragenden Flansch versehen, welcher als Halterung für eine hülsenförmige intumeszierende Masse dient, die den Bodenablaufstutzen bzw. ein an dieses angeschlossene Ablaufrohr umgibt.

Aus DE 10 2004 007 454 ist eine weitere Ablaufvorrichtung anderer Art bekannt, bei welcher die intumeszierende Masse bis zu einem Brand durch eine Vorrichtung gehalten wird und bei einem Brand in den Ablauf fällt und diesen verschließt. Andersartige Brandschutzvorrichtungen sind aus EP 0 090 635 A2, US 2002/ 100404 A1, GB 2 212 187 A, EP 1 703 189 A1, WO 2008/056028 A1, WO 99/18303 A1 und EP 0 153 564 A2 bekannt.

Als Maßstab für die brandhemmende Wirkung solcher Abläufe und Vorrichtungen können Kriterien an den Feuerwiderstand nach DIN 4102 angesetzt werden. Je nachdem wie lange ein Bauteil seine Funktion in Hinblick auf Tragfähigkeit, Raumabschluss, Wärmeisolation und Rauchdichtigkeit im Falle eines Brandes erfüllt, wird diesem Bauteil eine Feuerwiderstandsklasse zugeordnet. R30 bezeichnet beispielsweise eine Rohrdurchführung, welche im Brandfall seine o.g. Funktion für mindestens 30 Minuten erfüllt. Im Idealfall entsprechen sich die Feuerwiderstandsklassen der Rohrdurchführung und des vorhandenen Bodens bzw. der vorhandenen Decke. Üblicherweise beträgt die Feuerwiderstandsklasse eines Bodens F30 bis zu F120.

Bei einer Vielzahl der vorgenannten Abläufe mit den beschriebenen Aufnahmemitteln ist es vorgesehen den Raum zwischen dem Aufnahmemittel bzw. dem gesamten Ablauf mit Mörtel u.ä. abzudichten. Auf diese Weise wird auch eine Fixierung des Ablaufs erreicht. Dies trifft zu auf die Abläufe nach EP 0 457 012, EP 1 229 175 und DE 10 2004 007 454. Bei Abläufen gemäß EP 1 528 307 und EP 1 630 318 wird ein verbliebener Spalt zwischen Aufnahmemittel und Decken- bzw. Bodenöffnung durch eine Vergussmasse abgedichtet. Zusätzlich können derartige Abläufe durch Schrauben fixiert werden. Ein Nachrüsten derartiger Abläufe mit Brandschutzmitteln ist nur mit großem Aufwand möglich.

Erfolgt keine Abdichtung durch Mörtel, ist das Aufnahmemittel derart ausgebildet, dass die intumeszierende Masse auch in den Spalt zwischen Aufnahmemittel und der Decken- bzw. Bodenöffnung im Falle eines Brandes expandiert. Dieses ist z.B. bei den Abläufen gemäß DE 10 2004 020 251 und EP 1 577 453 der Fall. Bei den in der EP 1 577 453 offenbarten Abläufen ist zudem eine feuerfeste Lippendichtung zur Abdichtung des Spaltes vorgesehen. Zur Fixierung des Ablaufs wird bei dieser Vorrichtung ein aufwändiges, federkrallenartiges Befestigungsmittel inklusive Verschraubungen eingesetzt; auch die in der DE 10 2004 020 251 offenbarte Vorrichtung wird in ähnlicher Weise fixiert.

Die DE 20 2004 004 125 U1 beschreibt ferner ein Rohdurchführungselement für eine Wanne mit einem Abflussrohr, welches in eine Kernbohrung einer Betondecke einsetzbar ist und mittels eines Dichtelementes aus einem durch Wärme aufquellenden Material gegenüber der Innenwandung der Bohrung abdichtbar ist, wobei zur Fixierung des Ablaufrohres in der Bohrung ein Positionierungselement aus einem feuerbeständigem Material eingesetzt ist. Zusätzlich kann ein topfförmiger Formkörper in der Bohrung abgestützt sein, welcher innen- und außenseitig Dichtkörper aus unter Wärme aufquellendem Material aufweist.

Die Montage, beispielweise umfassend die Abdichtung mit Mörtel bzw. einer Vergussmasse, das Vorsehen einer passgenauen Öffnung und anschließende Fixierung, ist bei der Vielzahl der derzeit erhältlichen Abläufe aufwändig und kostenintensiv. Zusätzlich stellt der weit verbreitete Einsatz von metallischen, topfartigen Aufnahmemitteln einen weiteren negativen Kostenfaktor dar. Schließlich sind intumeszierende Massen als Brandschutzmittel relativ teuer. Bei einer Vielzahl von den derzeitigen Abläufen werden die intumeszierenden Massen flächig und in relativ großer Menge aufgebracht oder eingesetzt, was bei den relativ teueren intumeszierenden Massen nachteilig ist.

Ausgehend von dem Eingangs genannten Stand der Technik und den damit verbundenen Nachteilen soll die Erfindung einen Bodenablauf mit Brandschutzfunktion bereitstellen, der einfach zu montieren sowie nachzurüsten ist und dabei kostengünstig herzustellen ist.

Bei der erfindungsgemäßen Lösung wird diese Aufgabe durch einen Bodenablauf gemäß Anspruch 1 gelöst sowie durch einen Boden mit Bodenablauf gemäß Anspruch 10 und ferner ein Verfahren nach Anspruch 15.

Erfindungsgemäß umfasst die Brandschutzmanschette einen hitze- und druckstabilen Haltekörper mit einer Durchgangsöffnung für den Ablaufstutzen, wobei an einem Innenbereich der Durchgangsöffnung des Haltekörpers und an einem Außenbereich der Mantelfläche des Haltekörpers Brandschutzmittel vorgesehen sind, und wobei die Brandschutzmanschette mittels Befestigungsmittel an der Unterseite des Ablauftopfs derart befestigt ist, dass der Ablaufstutzen innerhalb der Brandschutzmanschette angeordnet ist, so dass der Bodenablauf mit an der Unterseite des Ablauftopfes befestigter Brandschutzmanschette in die Bodenöffnung einsetzbar ist, wobei die Brandschutzmanschette in Einbaulage in der Bodenöffnung derart angeordnet ist, so dass sich der Ablaufstutzen etwa mittig innerhalb der Durchgangsöffnung des Haltekörpers befindet.

Im Standardeinbaufall wird zunächst die Brandschutzmanschette mittels Befestigungsmittel an der Unterseite des Ablauftopfs im Bereich des Ablaufstutzens derart befestigt, dass der Ablaufstutzen innerhalb in der Brandschutzmanschette angeordnet ist. In diesem Bereich ist ebenfalls ein Abflussrohr samt Rohrmuffe vorgesehen. Durch die Befestigung der Brandschutzmanschette an dem Bodenablauf selbst und nicht direkt mit dem Boden bzw. der Decke, wird gewährleistet, dass die Brandschutzmanschette immer in der korrekten Position installiert ist. Spätere Bodenaufbauten für Duschrinnen o. ä, beispielweise mit Estrich führen nicht zu einer Relativverschiebung von Brandschutzmanschette und Ablaufstutzen. Dadurch können unterschiedliche horizontale Höhenlagen des Bodenablaufes in dem Boden auch nachträglich besonders einfach realisiert werden. Im Brandfall dichtet das aufschäumende Masse eventuell vorhandene Spalte und Öffnungen ab, so dass der Ablauf nicht komplett passgenau eingesetzt werden muss. Die vorgenannten Bauteile des Ablaufs sind vorzugsweise aus Kunststoff gefertigt, können aber in analoger Weise auch ganz oder teilweise aus einem anderen Material gefertigt sind, wie z.B. Metall.

Als Befestigungsmittel können vorzugsweise lösbare Verbindungen wie Schrauben, Klemmen, Gummibänder u.ä aber auch Klebeverbindungen und dergleichen vorgesehen sein. Durch die Befestigungsmittel ist die Brandschutzmanschette vorzugsweise an der Unterseite des Ablauftopfes befestigbar. Dazu kann es zweckmäßig sein, an der Unterseite des Ablauftopfes Aufnahmemittel für die Befestigungsmittel auszubilden, beispielsweise Gewinde u.ä.

Es kann ebenfalls vorgesehen sein, dass die Brandschutzmanschette durch die Befestigungsmittel direkt an dem Ablaufstutzen befestigbar ist. Beispielweise kann die Brandschutzmanschette zwischen zwei Gummimanschetten am Ablaufstutzen in Position gehalten werden.

Zur Montagevereinfachung kann die Brandschutzmanschette mehrteilig ausgebildet sein. Ferner können die Befestigungsmittel an der Manschette selbst ausgebildet sein. Derart ist es möglich, die Brandschutzmanschette über den Ablaufstutzen zu streifen und anschließend durch die Befestigungsmittel formschlüssig an dem Ablaufstutzen zu fixieren. Als Befestigungsmittel können vorgesehen sein: Klettverschlüsse, Rastverschlüsse, Klebeverbindungen, Bügelverschlüsse u.ä.

Der Bodenablauf samt Brandschutzmanschette wird im Standardeinbaufall bauseitig in eine vorzugsweise Durchgangsöffnung, beispielsweise eine Kernbohrung derart eingeführt, dass der Ablauftopf, die Brandschutzmanschette und der Ablaufstutzen gänzlich in die Öffnung eingelassen sind. Bauseitig liegt nun der umfängliche Flanschrand, welcher an der Oberseite des Ablauftopfes ausgebildet ist, auf dem Boden bzw. der Decke auf. Durch Fixierung des Flanschrandes mit dem Boden bzw. der Decke wird auch der Bodenablauf fixiert, was z.B. durch Verschraubungen erfolgen kann. Besonders bevorzugt ist es auch möglich den Flanschrand so auszubilden, dass er nicht auf den Boden bzw. der Decke aufliegt, sondern lediglich gerade bis zu einer Duschrinne o.ä. führt. Um die Haftung des Bodenablaufes an der Duschrinne o.ä. zu realisieren, kann der Flanschrand untermörtelt werden. Daneben können zusätzliche Mittel zur Fixierung vorgesehen sein. Zur Verbesserung der Abdichtung können zudem zusätzliche Dichtungen an dem Flanschrand vorgesehen werden.

Die Brandschutzmanschette enthält Brandschutzmittel, die im Fall eines Brandes die Bodenöffnung und den Ablaufstutzen, zumindest zeitweise, sperren und dabei gleichzeitig den Bodenablauf zusätzlich fixieren.

Die Brandschutzmanschette umfasst dazu vorzugweise einen Haltekörper aus druckstabilem und feuerbeständigem Material. Der Schmelzpunkt von diesem Material liegt vorzugsweise über 1000°C. Als Materialien können beispielsweise vorgesehen sein: Gips, Mörtel, Gipskarton, Gipsfaserplatten, Metallhohlkörper Kalziumsilkat-Plattenmaterial, gepresste Steinwolle, verzinkter Stahl u.ä.

Der Haltekörper ist vorzugsweise ringartig ausgebildet. Es sind jedoch noch weitere Geometrien möglich. Ist beispielweise die Öffnung für den Ablauf in dem Boden bzw. der Decke quadratisch vorgesehen, so ist es möglich, dass der Haltekörper in Draufsicht eine viereckige Außenkontur aufweist, wobei die Kontur des inneren Bereichs weiterhin vorzugsweise kreisförmig ausgebildet ist. Auf dem inneren Bereich und dem äußeren Bereich sind Brandschutzmittel ausgebildet. Ist der Haltekörper ringförmig, dann bilden der innere Bereich und der äußere Bereich jeweils einen inneren bzw. äußeren Ring aus Brandschutzmittel. Der Haltekörper ist vorzugsweise derart dimensioniert, dass er nachträglich an dem Bodenablauf befestigbar ist, wobei ein Spalt zwischen der Brandschutzmanschette und der Bodenablauföffnung und dem Ablaufstutzen verbleiben sollte. Bei einer ringförmigen Brandschutzmanschette beträgt der Innendurchmesser vorzugsweise 128 mm und der Außendurchmesser vorzugsweise 140mm. Durch eine derartige Dimensionierung können die Brandschutzmittel besonders sparsam und effektiv eingesetzt werden.

Als Brandschutzmittel für den inneren Bereich ist vorzugsweise eine intumeszierende Masse vorgesehen. Selbiges gilt für das Brandschutzmittel des äußeren Bereichs. Die Öffnung kann derart durch die beschriebene Expansion der intumeszierende Masse im Brandfall geschlossen werden. Dabei kann der Bodenablauf mittels des Füllköpers und der Befestigungsmittel in der intumeszierten Masse verankert sein. Somit kann der Bodenablauf durch den Haltekörper im Brandfall fixiert werden.

Als Brandschutzmittel für den äußeren Bereich muss nicht zwangsläufig eine relativ teuere intumeszierende Masse eingesetzt werden; es kann auch ein Material eingesetzt werden, welches schon beim Einbau den Raum zwischen Haltekörper und der Öffnung für den Bodenablauf rauchdicht verschließt und den Bodenablauf in der Öffnung einklemmt. Ein solches Material ist beispielsweise Steinwolle.

Durch die erfindungsgemäße Ausbildung des Haltekörpers werden die Brandschutzmittel, insbesondere die relativ teuere intumeszierende Masse, besonders effizient eingesetzt. Im Brandfall richtet sich der Expansionsdruck des inneren Bereichs direkt auf den Ablaufstutzen sowie Rohrmuffe und quetscht diese rauch- und feuerdicht ab. Hierfür sind der Ablaufstutzen, Rohrmuffe, Abflussrohr sowie der Bodenablauf vorzugsweise aus Kunststoff ausgebildet. Jedoch können auch noch andere Materialien, wie ein dünnes Metall eingesetzt werden.

In ähnlicher Weise wirkt der Expansionsdruck bzw. die Expansion des äußeren Bereichs zum Verschließen eines Spaltes zwischen der Öffnung des Bodenablaufes und dem Haltekörper. Durch den Haltekörper wird die Druckkraft der Expansion genau in die benötigte Richtungen gelenkt. Durch den Haltekörper kann somit eine besonders effiziente und sparsame Verwendung des Brandschutzmittels, insbesondere der intumeszierenden Masse, realisiert werden.

Auch der Umstand, dass nun keine topfartigen, hitze- und formstabilen Aufnahmemittel, insbesondere solche aus Metall, mehr vorgesehen werden müssen, wirkt sich kostensenkend aus.

Zur Unterstützung eines gerichteten Expansionsdruckes ist es möglich, neben einem bevorzugten quadratischen Querschnitt, auch andere Querschnittsgeometrien des Haltekörpers vorzusehen, insbesondere Querschnitte mit Hinterschnitten. Beispielsweise kann ein "Doppel-T" - Querschnitt zweckmäßig sein, wobei die horizontalen lateralen Wandungen eines solchen Doppel-T Querschnitts die Expansion der intumeszierenden Masse besonders gut in eine horizontale Richtung lenken. Die intumeszierende Masse wird dann als Brandschutzmittel noch effektiver eingesetzt. Die Durchgangsöffnung für den Ablaufstutzen kann exzentrisch angeordnet sein, so dass die Bandschutzmanschette nicht rotationssymmetrisch ausgebildet ist. Auf diese Weise können komplexe Ausbildungen von Bodenabläufen berücksichtig werden, beispielsweise solche mit integriertem Siphon.

Durch die erfindungsgemäße Lösung ist es auch möglich, den eingangs beschriebenen Bodenablauf nachträglich mit einer Brandschutzmanschette auszustatten, ohne dass eine bauseitige Demontage des Ablaufs sowie eines Fliesenbelages erforderlich ist. Ein Nachrüsten von der Unterseite der Öffnung für den Bodenablauf ist möglich. Gegebenenfalls ist eine Unterdecke und eine an den Ablaufstutzen angeschlossene Abwasserleitung temporär zu entfernen. Dies ist insgesamt weniger aufwändig als die bauseitige Demontage, umfassend Ablauf und Bodenabdichtung, Estrich, Fliesenbelag etc.

Wie eingangs beschrieben, ist es möglich die Brandschutzmanschette mehrteilig zu gestalten, so dass ein Entfernen einer Abwasserleitung Nachrüsten unnötig ist.

Zur bedarfsgerechten Anpassung der Dichtwirkung können mehrere Brandschutzmanschetten vertikal übereinander angeordnet werden. So können zur Verwirklichung von verschiedenen Feuerwiderstandsklassen mehrere Brandschutzmanschetten vertikal übereinander angeordnet werden. Zum Beispiel wäre es möglich, dass die Verwendung von drei Brandschutzmanschetten, die jeweils einen Feuerwiderstand von min. 30 Minuten gewährleisten würden, nun insgesamt min. 90 Minuten realisieren, also Feuerwiderstandklasse R 90. Eine derartige modulare Lösung senkt die Produktionskosten.

Die vorgehenden Beschreibungen beziehen sich auf einen Bodenablauf aus Kunststoff, bei welchem auch das Abflussrohr und die Rohrmuffe vorzugsweise ebenfalls aus Kunststoff ausgebildet sind. Es ist jedoch auch denkbar, den Bodenablauf und die angeschlossenen Bauteile ganz oder teilweise aus anderen Materialien zu fertigen, beispielsweise aus Metall. Bei Abläufen aus Metall ist wird die Funktion des Abquetschens eines entsprechenden Ablaufstutzens in Abhängigkeit von der Materialstärke gegebenenfalls eingeschränkt, die Funktion des rauchdichten Abschließens durch ein aufschäumendes Material wird aber weiterhin verwirklicht. Ferner ist es denkbar, einen metallischen Ablaufstutzen so zu gestalten, dass dieser durch den Expansionsdruck abgequetscht und durch die aufschäumende Masse verschlossen wird, beispielweise durch Sollbruchstellen.

Vier bevorzugte Ausführungsbeispiele der Erfindung werden anhand der nachfolgenden Zeichnungen näher erläutert. Es zeigen:
- Fig. 1: ein Schnittbild einer Ausführungsform des erfindungsgemäßen Bodenablaufs bei Einbau in eine Bodenöffnung mit einer Brandschutzmanschette mit einer intumeszierenden Masse als Brandschutzmittel im Innen- und Außenbereich,
- Fig. 2: ein Schnittbild einer weiteren Ausführungsform des Bodenablaufs im Einbau in eine Bodenöffnung, wobei der Boden mit Estrich versehen ist,
- Fig. 3: ein Schnittbild einer weiteren Ausführungsform des Bodenablaufs im Einbau in eine Bodenöffnung, wobei als Brandschutzmittel im Innenbereich des Haltekörpers der Brandschutzmanschette eine intumeszierende Masse und im Außenbereich Steinwolle vorgesehen ist, und
- Fig. 4: ein Schnittbild der Ausführungsform des Bodenablaufs gemäß Fig. 1 mit einer angeschlossenen Duschrinne, einschließlich Tauchrohr und Abdeckung.

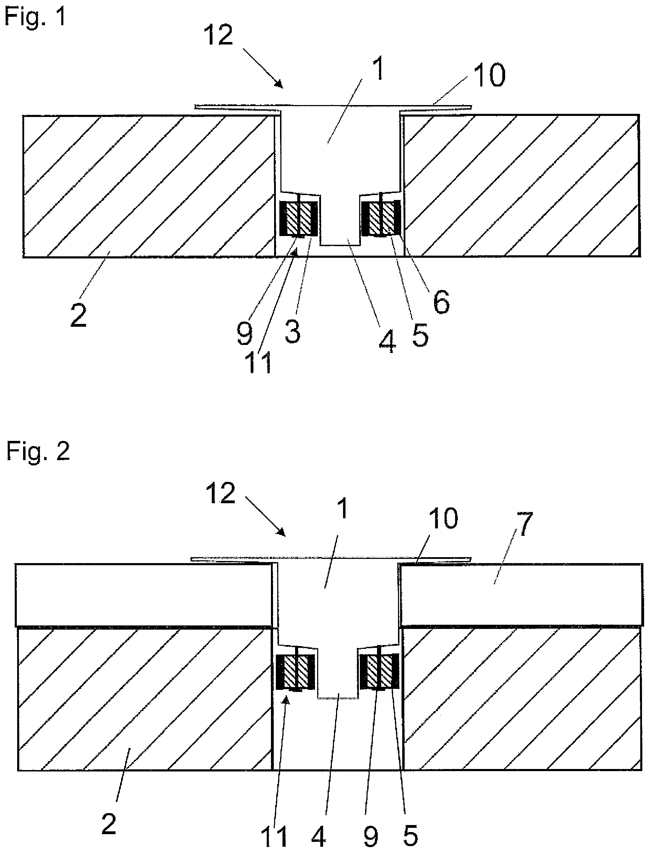

Figur 1 zeigt eine durchgängige Öffnung bzw. Bohrung in einem Boden 2. Der Durchmesser dieser Öffnung beträgt z.B. 13-14 cm. In diese Öffnung ist ein Bodenablauf 12 aus Kunststoff eingesetzt. Der oberseitige Flanschrand 10 liegt bauseitig auf dem Boden auf und ist durch nicht dargestellte Befestigungsmittel an dem Boden 2 fixiert. Der Ablauftopf 1 und der unterseitige Ablaufstutzen 4, der zum Anschluss eines Abflussrohrs ausgebildet ist, sind in der Öffnung im Boden 2 angeordnet. Beide vorgenannten Bauteile sind ebenfalls aus Kunststoff ausgebildet. In nicht dargestellter Weise ist das Abflussrohr aus Kunststoff mittels einer Kunststoffrohrmuffe an dem Ablaufstutzen 4 befestigt. Durch als Schrauben 9 ausgebildete Befestigungsmittel, ist eine ringförmige Brandschutzmanschette 11 an der Unterseite des Ablauftopfes 1 derart befestigt, so dass der Ablaufstutzen 4 mittig innerhalb der Öffnung der kreisringförmigen Brandschutzmanschette angeordnet ist. Diese Brandschutzmanschette 11 umfasst einen hitze- und druckbeständigen, ringförmigen Haltekörper 5 aus Gips, an dessen Innen- und Außenbereich 3, 6 Brandschutzmittel vorgesehen sind.

Als Brandschutzmittel ist eine intumeszierende Masse vorgesehen, die im Falle eines Brandes expandiert und den Ablaufstutzen 4 samt Rohrmuffe dichtend zusammendrückt. Zusätzlich dichtet das Brandschutzmittel im Außenbereich 6 nach Außen ab und schließt so den Spalt zwischen der Bodenöffnung und dem Außenbereich 6 des Halteköpers 5. Im Brandfall gewährleistet dieser Bodenablauf seine Funktion in Sinne des Brandschutzes für über 120 Minuten. Dies entspricht Feuerwiderstandsklasse R120 nach DIN 4102. Wie dargestellt, wird das Brandschutzmittel besonders sparsam und effektiv eingesetzt, denn der Haltekörper 5 aus Gips nimmt einen Großteil des Raums zwischen Ablaufstutzen 4 und Öffnung im Boden 2 ein. Durch den geringen Abstand zwischen dem Innenbereich 3 und Ablaufstutzen 4 und den ebenfalls geringen Abstand zwischen Außenbereich 6 und der Öffnung im Boden 2, ist nun eine vergleichsweise geringe Menge der intumeszierenden Masse als Brandschutzmittel ausreichend. Der Haltekörper 5 wird durch die intumeszierende Masse im Brandfall in selbiger verankert. Diese Verankerung trägt dazu bei, dass der Bodenablauf auch im Brandfall nicht aus der Bodenöffnung fällt und seine Einbauposition beibehält. Damit wird gewährleistet, dass die Brandschutzfunktion des Ablaufs an der vorgesehen Stelle, nämlich in der Bodenöffnung, realisiert wird.

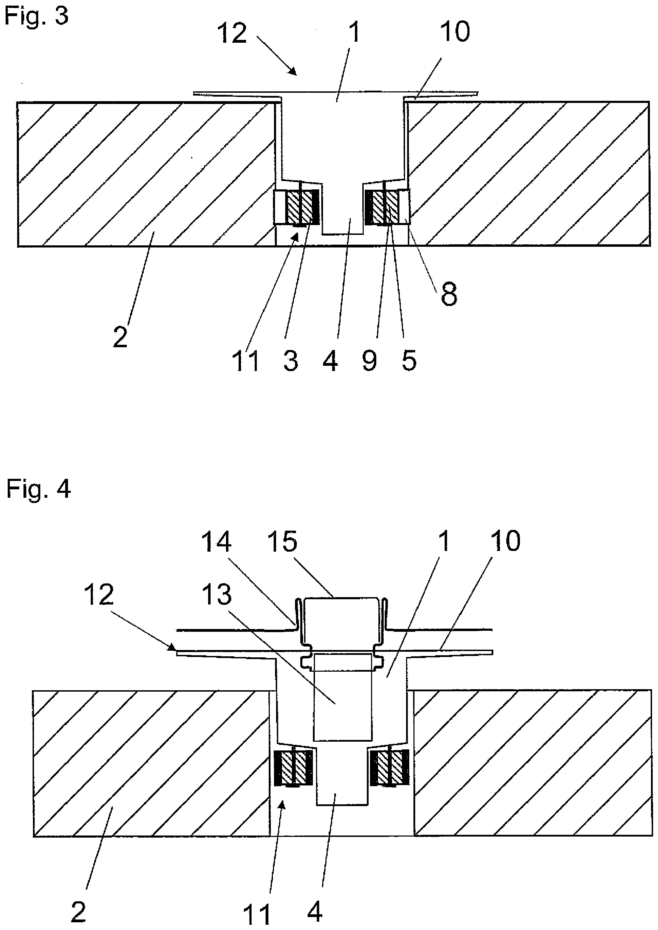

Figur 2 zeigt eine weitere Ausführungsform des Bodenablaufs 12 im Einbau in einen Boden 2, der zusätzlich mit einem Estrichaufbau 7 versehen ist. Der Haltekörper 5 ist gemäß dieser Ausführungsform aus verzinktem Stahl ausgebildet. Dargestellt ist die einfache Realisierung einer von Figur 1 unterschiedlichen horizontalen Höhenlage des Bodenablaufes 12 in dem Boden. Die Brandschutzmanschette 11 ist weiterhin direkt mittels der Befestigungsmittel 9 an der Unterseite des Ablauftopfes 1 befestigt, so dass sich der Ablaufstutzen 4 mittig innerhalb der Brandschutzmanschette 11 befindet. Der horizontale Versatz des Bodenablaufes 12 führt nicht zu einer Relativverschiebung der Brandschutzmanschette. Für das Vorsehen von unterschiedlichen horizontalen Höhenlagen müssen deshalb auch keine separaten Maßnahmen bezüglich der Brandschutzmanschette getroffen werden. Der Einbau des Bodenablaufes 12 gestaltet sich also genauso einfach, wie der Einbau gemäß Figur 1. Dabei liegt der Flanschrand nicht auf den Boden bzw. der Decke auf, sondern führt zu einer in Figur 4 dargestellten Duschrinne 14.

Figur 3 zeigt eine weitere Ausführungsform des Bodenablaufes 12. Der Bodenablauf 12 ist bis auf den Außenbereich des Haltekörpers 5 baugleich mit der Ausführungsform gemäß Figur 1 und ebenfalls aus Kunststoff. Als Brandschutzmittel im äußeren Bereich des Haltekörpers 5 ist Steinwolle 8 vorgesehen. Diese Steinwolle 8 ist rauchdicht und elastisch und übt eine Klemmwirkung zwischen der Öffnung im Boden 2 und dem Haltekörper 5 aus. Im Innenbereich 3 ist als Brandschutzmittel wieder eine intumeszierende Masse vorgesehen. Im Brandfall wird der Ablaufstutzen mit Rohrmuffe und Rohr in bekannter Weise durch dieses Brandschutzmittel, zumindest temporär geschlossen. Durch die Steinwolle 8 ist ein Brandschutz auch zwischen dem äußeren Bereich des Haltekörpers 5 und der Öffnung im Boden realisiert. Durch die Klemmwirkung wird ebenfalls gewährleistet, dass der Bodenablauf 12 auch im Brandfall seine Einbauposition beibehält und die Brandschutzfunktion an der vorgesehenen Stelle realisiert wird.

Figur 4 zeigt einen Bodenablauf 12 gemäß Figur 1 im Einbau mit einer Duschrinne 14 für eine wannenlose Dusche. In eine oberseitige Öffnung des Ablauftopfs 1 des Bodenablaufs 12 ist der Ablaufstutzen der Duschrinne 14 mit angeschlossenem Tauchrohr 13 eingeführt. Durch nicht dargestellte Befestigungsmittel und Dichtungen sind Duschrinne 14 und Tauchrohr 13 fixiert. Eine perforierte Abdeckung 15 ist über der Rinne und den Ablauf der Duschrinne 14 abgeordnet. Um die Haftung des Bodenablaufes 12 an der Duschrinne 14 zu realisieren, ist der Flanschrand 10 untermörtelt. Die Oberseite der Abdeckung 15 und die Ränder der Duschrinne 14 schließen bündig mit einem nicht dargestellten mehrschichtigen Bodenaufbau ab.

Die Brandschutzmanschetten der erfindungsgemäß vorgeschlagenen Ausführungsformen des Bodenablaufs 12 lassen sich sowohl bauseitig als auch nachträglich einfach und kostengünstig einbauen. Dazu muss nur die (nicht dargestellte) an den Ablaufstutzen 4 angeschlossene Abwasserleitung temporär entfernt werden.

### Bezugszeichenliste

- 1: Ablauftopf
- 2: Boden
- 3: Innenbereich
- 4: Ablaufstutzen
- 5: Haltekörper
- 6: Außenbereich
- 7: Estrichaufbau
- 8: Steinwolle
- 9: Befestigungsmittel
- 10: Flanschrand
- 11: Brandschutzmanschette
- 12: Bodenablauf
- 13: Tauchrohr
- 14: Duschrinne
- 15: Abdeckung

## Patentansprüche

1. Bodenablauf (12), der in eine durchgehende Bodenöffnung einsetzbar ist, umfassend einen Ablauftopf (1) mit einem oberseitigen Flanschrand (10) und unterseitigen Ablaufstutzen (4) sowie einer Brandschutzmittel aufweisenden Brandschutzmanschette (11), wobei die Brandschutzmanschette (11) einen hitze- und druckstabilen Haltekörper (5) mit einer Durchgangsöffnung für den Ablaufstutzen (4) umfasst, und die Brandschutzmittel an einem Innenbereich (3) der Durchgangsöffnung des Haltekörpers (5) und an einem Außenbereich (6) der Mantelfläche des Haltekörpers (5) angeordnet sind, und die Brandschutzmanschette (11) mittels Befestigungsmittel an der Unterseite des Ablauftopfes (1) derart befestigt ist, dass der Ablaufstutzen (4) innerhalb der Brandschutzmanschette (11) angeordnet ist, so dass der Bodenablauf (12) mit an der Unterseite des Ablauftopfes (1) befestigter Brandschutzmanschette (11) in die Bodenöffnung einsetzbar ist, wobei die Brandschutzmanschette (11) in Einbaulage in der Bodenöffnung derart angeordnet ist, dass sich der Ablaufstutzen (4) mittig innerhalb der Durchgangsöffnung des Haltekörpers (5) befindet.

2. Bodenablauf (12) nach Anspruch 1, **dadurch gekennzeichnet, dass** das Material des Haltekörpers (5) einen Schmelzpunkt von über 1000°C aufweist.

3. Bodenablauf (12) nach einem der vorherigen Ansprüche, **dadurch gekennzeichnet, dass** als Brandschutzmittel im Innenbereich (3) und/oder dass als Brandschutzmittel im Außenbereich (6) eine intumeszierende Masse vorgesehen ist.

4. Bodenablauf (12) nach einem der vorherigen Ansprüche, **dadurch gekennzeichnet, dass** als Brandschutzmittel im Außenbereich (6) Steinwolle (8) vorgesehen ist.

5. Bodenablauf (12) nach einem der vorherigen Ansprüche, **dadurch gekennzeichnet, dass** die Brandschutzmanschette (11) ringförmig und/oder dass die Brandschutzmanschette (11) mehrteilig ausgebildet ist.

6. Bodenablauf (12) nach einem der vorherigen Ansprüche, **dadurch gekennzeichnet, dass** die Innenkontur und die Außenkontur des Haltekörpers (5) in Draufsicht voneinander verschieden ausgebildet sind.

7. Bodenablauf (12) nach einem der vorherigen Ansprüche, **dadurch gekennzeichnet, dass** mehrere Brandschutzmanschetten (11) vertikal übereinander vorgesehen sind.

8. Bodenablauf (12) nach einem der vorherigen Ansprüche, **dadurch gekennzeichnet, dass** der Querschnitt der Brandschutzmanschette (11) Hinterschnitte aufweist.

9. Bodenablauf (12) nach einem der vorherigen Ansprüche, **dadurch gekennzeichnet, dass** der oberseitige Flanschrand (10) die an dem Außenbereich (6) der Mantelfläche des Haltekörpers (5) angeordneten Brandschutzmittel radial nach außen hin überkragt.

10. Boden mit Bodenablauf (12) nach einem der Ansprüche 1 bis 9, wobei der Bodenablauf (12) in einer durchgehenden Bodenöffnung eingesetzt ist, wobei die Befestigung der Brandschutzmanschette (11) am Bodenablauf (12) so vorgesehen ist, dass die Brandschutzmanschette (11) in Einbaulage in der Bodenöffnung derart angeordnet ist, dass sich der Ablaufstutzen (4) mittig innerhalb der Durchgangsöffnung des Haltekörpers (5) befindet.

11. Boden mit Bodenablauf (12) nach Anspruch 10, **dadurch gekennzeichnet, dass** der Bodenablauf (12) samt Brandschutzmanschette (11) bauseitig in eine Durchgangsöffnung derart eingeführt ist, dass der Ablauftopf (1), die Brandschutzmanschette (11) und der Ablaufstutzen (4) gänzlich in die Öffnung eingelassen sind.

12. Boden mit Bodenablauf (12) nach Anspruch 11, **dadurch gekennzeichnet, dass** bauseitig der umfängliche Flanschrand (10), welcher an der Oberseite des Ablauftopfes (1) ausgebildet ist, auf dem Boden oder der Decke aufliegt oder der Flanschrand (10) gerade bis zu einer Duschrinne geführt ist.

13. Boden mit Bodenablauf (12) nach einem der Ansprüche 10 bis 12, **dadurch gekennzeichnet, dass** bauseitig der umfängliche Flanschrand (10) mit dem Boden bzw. der Decke fixiert ist und dass durch Fixierung des Flanschrandes (10) auch der Bodenablauf (12) fixiert ist.

14. Boden mit Bodenablauf (12) nach einem der Ansprüche 10 bis 13, **dadurch gekennzeichnet, dass** der Haltekörper (5) derart dimensioniert ist, dass er nachträglich an dem Bodenablauf (12) befestigbar ist, wobei ein Spalt zwischen der Brandschutzmanschette (11) und der Bodenablauföffnung und dem Ablaufstutzen (4) verbleibt.

15. Verfahren zur Montage eines Bodenablaufs (12) nach den Ansprüchen 1 bis 9, **dadurch gekennzeichnet, dass** der Bodenablauf (12) mit an der Unterseite des Ablauftopfes (1) befestigter Brandschutzmanschette (11) bauseitig in eine Durchgangsöffnung derart eingeführt wird, dass der Ablauftopf (1), die Brandschutzmanschette (11) und der Ablaufstutzen (4) gänzlich in die Öffnung eingelassen sind.

## Claims

1. Floor drain (12) which can be inserted into a continuous floor opening, comprising a drain pot (1) with a flanged edge (10) on the upper side and a drain connection piece (4) on the lower side as well as a fire protection sleeve (11) having fire protection means, wherein the fire protection sleeve (11) comprises a heat- and pressure-stable holding body (5) with a passage opening for the drain connection piece (4), and the fire protection means are arranged at an inner region (3) of the through-opening of the holding body (5) and at an outer region (6) of the lateral surface of the holding body (5), and the fire protection sleeve (11) is fastened to the underside of the drain pot (1) by fastening means in such a way that the drain connection piece (4) is arranged inside the fire protection sleeve (11) so that the floor drain (12) can be inserted into the floor opening with the fire protection sleeve (11) fastened to the underside of the drain pot (1), the fire protection sleeve (11) being arranged in the floor opening in the installation position in such a way that the drain connection piece (4) is located centrally within the passage opening of the holding body (5).

2. Floor drain (12) according to claim 1, **characterized in that** the material of the holding body (5) has a melting point of more than 1000°C.

3. Floor drain (12) according to one of the preceding claims, **characterized in that** an intumescent mass is provided as a fire protection means in the inner region (3) and/or an intumescent mass is provided as a fire protection means in the outer region (6).

4. Floor drain (12) according to one of the preceding claims, **characterized in that** rock wool (8) is provided as the fire protection means in the outer region (6).

5. Floor drain (12) according to one of the preceding claims, **characterized in that** the fire protection sleeve (11) is annular and/or that the fire protection sleeve (11) is formed in multipart design.

6. Floor drain (12) according to one of the preceding claims, **characterized in that** the inner contour and the outer contour of the holding body (5) are formed differently from one another in plan view.

7. Floor drain (12) according to one of the preceding claims, **characterized in that** several fire protection sleeves (11) are provided vertically one above the other.

8. Floor drain (12) according to one of the preceding claims, **characterized in that** the cross-section of the fire protection sleeve (11) has undercuts.

9. Floor drain (12) according to one of the preceding claims, **characterized in that** the upper flange edge (10) projects radially outwards beyond the fire protection means arranged on the outer region (6) of the lateral surface of the holding body (5).

10. Floor with floor drain (12) according to any of claims 1 to 9, wherein the floor drain (12) is inserted in a continuous floor opening, wherein the attachment of the fire protection sleeve (11) to the floor drain (12) is provided in such a way that the fire protection sleeve (11) in the installation position is arranged in the floor opening in such a way that the drain connection piece (4) is located centrally within the passage opening of the holding body (5).

11. Floor with floor drain (12) according to claim 10, **characterized in that** the floor drain (12) together with the fire protection collar (11) is inserted into a passage opening on site in such a way that the drain pot (1), the fire protection sleeve (11) and the drain connection piece (4) are completely embedded in the opening.

12. Floor with floor drain (12) according to claim 11, **characterized in that** the peripheral flange edge (10), which is formed on the upper side of the drain pot (1), rests on the floor or ceiling or the flange edge (10) is led straight up to a shower channel on site.

13. Floor with floor drain (12) according to any of claims 10 to 12, **characterized in that** the peripheral flange edge (10) is fixed to the floor or ceiling on site and that by fixing the flange edge (10) the floor drain (12) is also fixed.

14. Floor with floor drain (12) according to any of claims 10 to 13, **characterized in that** the holding body (5) is dimensioned in such a way that it can be subsequently fixed to the floor drain (12), a gap remaining between the fire protection sleeve (11) and the floor drain opening and the drain connection piece (4).

15. Method for mounting a floor drain (12) according to claims 1 to 9, **characterized in that** the floor drain (12) with the fire protection sleeve (11) attached to the underside of the drain pot (1) is inserted into a passage opening on site in such a way that the drain pot (1), the fire protection sleeve (11) and the drain connection piece (4) are completely embedded in the opening.

## Revendications

1. Siphon de sol (12) qui peut être inséré dans une ouverture continue du sol, comprenant un pot d'écoulement (1) avec un bord à bride (10) sur le côté supérieur et une tubulure d'écoulement (4) sur le côté inférieur ainsi qu'un manchon de protection contre le feu (11) contenant des moyens de protection contre le feu, dans lequel le manchon de protection contre le feu (11) comprend un corps de retenue (5) stable à la chaleur et à la pression avec une ouverture de passage pour la tubulure d'écoulement (4) et les moyens de protection contre le feu sont disposés à une zone intérieure (3) de l'ouverture de passage du corps de maintien (5) et à une zone extérieure (6) de la surface latérale du corps de maintien (5) et le manchon de protection contre le feu (11) est fixé au moyen de moyens de fixation à la face inférieure du pot d'écoulement (1) de cette manière que la tubulure d'écoulement (4) est disposée à l'intérieur du manchon de protection contre le feu (11), de sorte que le siphon de sol (12) peut être inséré dans l'ouverture du sol avec le manchon de protection contre le feu (11) fixé à la face inférieure du pot d'écoulement (1), le manchon de protection contre le feu (11) étant disposé dans l'ouverture du sol en position de montage de telle sorte que la tubulure d'écoulement (4) se trouve au centre de l'ouverture de passage du corps de retenue (5).

2. Siphon de sol (12) selon la revendication 1, **caractérisé en ce que** le matériau du corps de retenue (5) a un point de fusion supérieur à 1000°C.

3. Siphon de sol (12) selon l'une des revendications précédentes, **caractérisé en ce qu'**une masse intumescente est prévue comme moyen de protection contre le feu dans la zone intérieure (3) et/ou qu'une masse intumescente est prévue comme moyen de protection contre le feu dans la zone extérieure (6).

4. Siphon de sol (12) selon l'une des revendications précédentes, **caractérisé en ce que** de la laine de roche (8) est fournie comme moyen de protection contre le feu dans la zone extérieure (6).

5. Siphon de sol (12) selon l'une des revendications précédentes, **caractérisé en ce que** le manchon de protection contre le feu (11) est annulaire et/ou que le manchon de protection contre le feu (11) est formé en plusieurs parties.

6. Siphon de sol (12) selon l'une des revendications précédentes, **caractérisé en ce que** le contour intérieur et le contour extérieur du corps de retenue (5) sont formés différemment l'un de l'autre en vue de dessus.

7. Siphon de sol (12) selon l'une des revendications précédentes, **caractérisé en ce qu'**une pluralité de manchons de protection contre le feu (11) sont prévus verticalement les uns au-dessus des autres.

8. Siphon de sol (12) selon l'une des revendications précédentes, **caractérisé en ce que** la section du manchon de protection contre le feu (11) présente des contre-dépouilles.

9. Siphon de sol (12) selon l'une des revendications précédentes, **caractérisé en ce que** le bord supérieur de la bride (10) dépasse radialement vers l'extérieur au-delà des moyens de protection contre le feu disposés sur la zone extérieure (6) de la surface extérieure du corps de retenue (5).

10. Sol avec un siphon de sol (12) selon l'une des revendications 1 à 9, le siphon de sol (12) étant inséré dans une ouverture de sol continue, la fixation du manchon de protection contre le feu (11) sur le siphon de sol (12) étant prévue de telle sorte que le manchon de protection contre le feu (11) en position de montage est disposé dans l'ouverture de sol de telle sorte que la tubulure d'écoulement (4) se trouve au centre de l'ouverture de passage du corps de retenue (5).

11. Sol avec un siphon de sol (12) selon la revendication 10, **caractérisé en ce que** le siphon de sol (12) avec le manchon de protection contre le feu (11) est inséré sur place dans une ouverture de passage de telle manière que le pot d'écoulement (1), le manchon de protection contre le feu (11) et la tubulure d'écoulement (4) sont complètement encastrés dans l'ouverture.

12. Sol avec un siphon de sol (12) selon la revendication 11, **caractérisé en ce que** le bord périphérique à bride (10), qui est formé sur le côté supérieur du pot d'écoulement (1), repose sur le sol ou le plafond sur place ou le bord à bride (10) est guidé directement jusqu'à un canal de douche.

13. Sol avec un siphon de sol (12) selon l'une des revendications 10 à 12, **caractérisé en ce que** le bord périphérique à bride (10) est fixé sur place au sol ou au plafond et que par la fixation du bord à bride (10) le siphon de sol (12) est également fixé.

14. Sol avec un siphon de sol (12) selon l'une des revendications 10 à 13, **caractérisé en ce que** le corps de retenue (5) est dimensionné de telle sorte qu'il peut être fixé ultérieurement au siphon de sol (12), un espace restant entre le manchon de protection contre le feu (11) et l'ouverture de l'écoulement de sol et la tubulure d'écoulement (4).

15. Procédé pour l'installation d'un siphon de sol (12) selon les revendications 1 à 9, **caractérisé en ce que** le siphon de sol (12) avec le manchon de protection contre le feu (11) fixé à la face inférieure du pot d'écoulement (1) est inséré sur site dans une ouverture de passage de telle sorte que le pot d'écoulement (1), le manchon de protection contre le feu (11) et la tubulure d'écoulement (4) soient complètement encastrés dans l'ouverture.
